# EUROPEAN PATENT APPLICATION

(11) **EP 2 085 300 A2**
(43) Date of publication of application: **05.08.2009**
(21) Application number: 09150948.9
(22) Date of filing: 20.01.2009
(51) Int. Cl.: B62H 1/12

(54) **Device for stabilising a two-wheeled vehicle**

(30) Priority: 22.01.2008 IT MO20080018
(71) Applicant: Urbini, Carlo, 41100 Modena (IT)
(72) Inventor: Urbini, Carlo, 41100 Modena (IT)
(74) Representative: Crugnola, Pietro

(57) **Abstract**

A two-wheeled (2, 3) vehicle (1) comprising a front wheel (2) and a back wheel (3) aligned on themselves along a longitudinal axis (A) of the vehicle (1), a closed bodywork (4) of automobile type inside which there is defined a compartment (5) for a driver (7), and propelling means (22); the vehicle (1) further comprises stabilising means (11a, 11b) suitable for ensuring a stable rest on the ground of said vehicle (1), said stabilising means (11a, 11b) being activatable when said vehicle (1) moves at a lesser speed than a preset minimum speed, or in the case of crashing of said vehicle (1) against an obstacle.

## Description

The present invention relates to a two-wheeled vehicle provided with a bodywork of closed type, i.e. a vehicle of motorcycle type with closed bodywork similar to the bodywork of four-wheeled automobile-type vehicles.

It is known that the rate of occupancy of road vehicles for the conveyance of persons, defined as the number of occupying passengers/number of places approved for passengers, is on average less than 25%, i.e. only the driver is present, this rate rarely rises to 50%, very rarely does it reach higher values.

This entails, in relation to known prior-art vehicles, acquisition costs, operating consumption, environmental air pollution, geometrical pollution of the spaces intended for mobility that are much greater than those that would be obtainable with vehicles dimensioned, for the same comfort, for the actual average number of passengers, which, in most cases is reduced to only the driver.

Therefore, current vehicles, having the feature of great capacity but low use, have very high operating costs per passenger, inasmuch as this is linked to the conveying potential rather than to the effective use thereof.

This objectively entails waste of resources, also with resulting exaggerated pollution, both in terms of consumption of oxygen and the production of polluting fumes, and in terms of the space constantly occupied on public ground.

The present invention is intended to provide a vehicle that enables the occupied spaces, consumption and pollution to be reduced drastically in relation to the users per kilometres factor, without foregoing the typical travel comfort of an average saloon.

Said vehicle, having to be particularly indicated for use in an urban environment, with relatively low average daily mileage, is also within the range of even purely electric traction.

According to the present invention there is provided a two-wheeled vehicle comprising a front wheel and a back wheel aligned on themselves along a longitudinal axis of the vehicle, a closed bodywork of automobile type inside which there is defined a compartment for a driver, and propelling means, characterised in that it comprises stabilising means suitable for ensuring a stable rest on the ground to said vehicle, said stabilising means being activatable when said vehicle moves at a lower speed than a preset minimum speed, or in the event of crashing of said vehicle against an obstacle.

Owing to the invention it is possible to make a vehicle, preferably for conveying a single person, which has dimensions that are comparable to those of a motorcycle and which is provided with a comfortable and spacious closed compartment that is able to guarantee the driver a comfort that is comparable to that of a saloon of the upper price bracket.

The vehicle according to the invention has a motorcycle-type driving principle, i.e. it moves in equilibrium on two wheels, arranged longitudinally with respect to the travel direction, but has a driving position of automobile type, combining the typical comfort of an average saloon with the handleability, overall dimensions and consumption of a motorcycle.

A manner of implementing the invention is disclosed in greater detail below, merely by way of non-limiting example, with reference to the attached drawings, in which:
Figure 1 is a elevation view of a vehicle according to the invention;
Figure 2 is a longitudinal section of the vehicle in Figure 1;
Figure 3 is a view like the one in Figure 1, partially fragmentary, that illustrates the opening system of the doors of the vehicle and the additional means for resting on the ground;
Figure 4 is a rear view of the vehicle in Figure 1 with the additional means for resting on the ground in the operating position;
Figure 5 is a partially fragmentary and sectioned front view of the vehicle in Figure 1, with the additional means for resting on the ground in the operating position;
Figure 6 is a partially sectioned front view of the vehicle in Figure 1, with the additional means for resting on the ground in the non-operating position;
Figure 7 is a top view of the vehicle in Figure 1 with the additional means for resting on the ground in the operating position;
Figure 8 is a fragmentary and partially sectioned view like the one in Figure 7;
Figure 9 is a perspective view of a vehicle according to the invention with closed doors and additional means for resting on the ground in a non-operating position;
Figure 10 is a perspective view of the vehicle in Figure 9, with open doors and additional means for resting on the ground in the operating position;
Figures 11, 12 and 13 are partially fragmentary top views of a vehicle according to the invention that illustrate the position of the seat of the driver during travelling and for entering and exiting the vehicle, respectively from the right and the left.

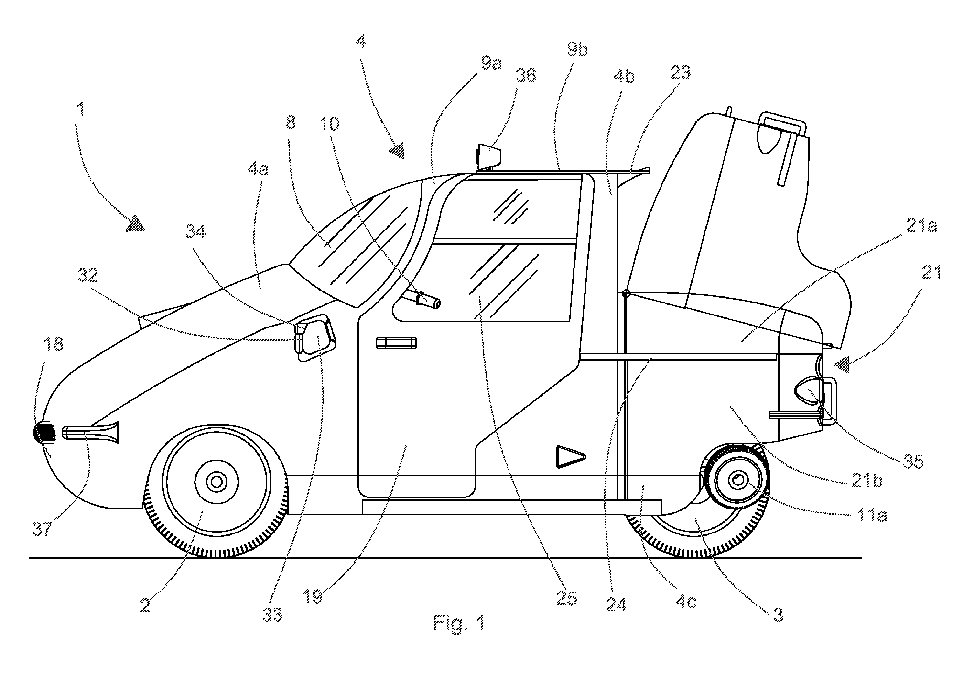

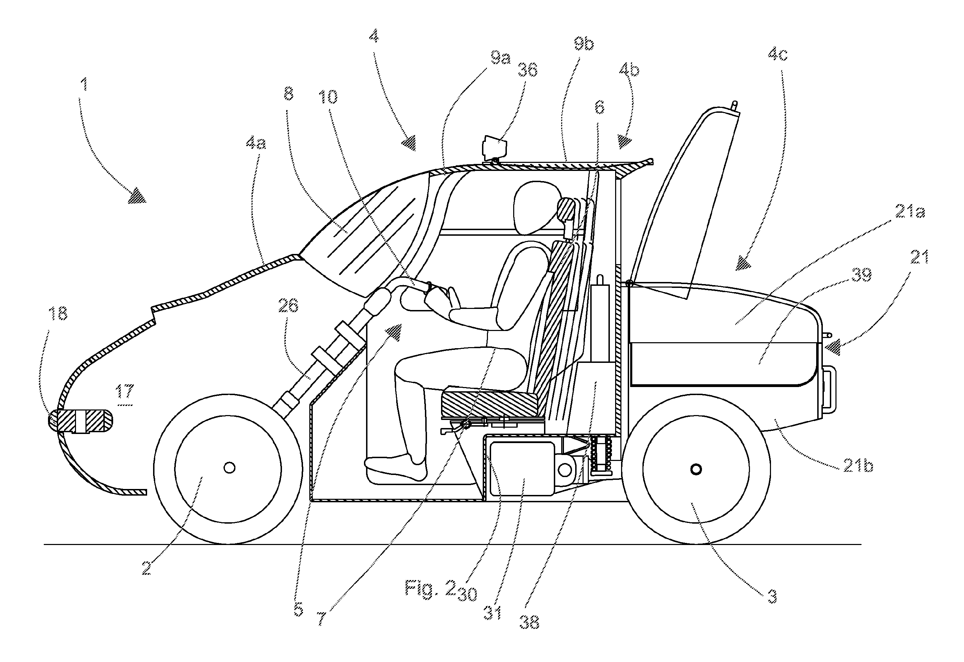

In Figure 1 there is illustrated a one-seat motor vehicle 1 that rests on the ground by means of a front turning wheel 2 and a back wheel 3 aligned in the advancing direction of the vehicle 1. The vehicle 1 is provided with a bodywork 4 of closed type, inside which there is defined a compartment 5 (Figure 2) in which the driving seat of the vehicle is obtained, provided with an armchair seat 6 for the driver 7. The compartment 5 has dimensions such as to provide the driver with a usable space and a comfort that is comparable to that of the driving seat of a saloon in the upper price bracket.

With the front wheel 2 there is associated a handlebar 10, for example of the motorcycle type, located inside the compartment 5, by means of which the driver 7 can control steering of the front wheel 2.

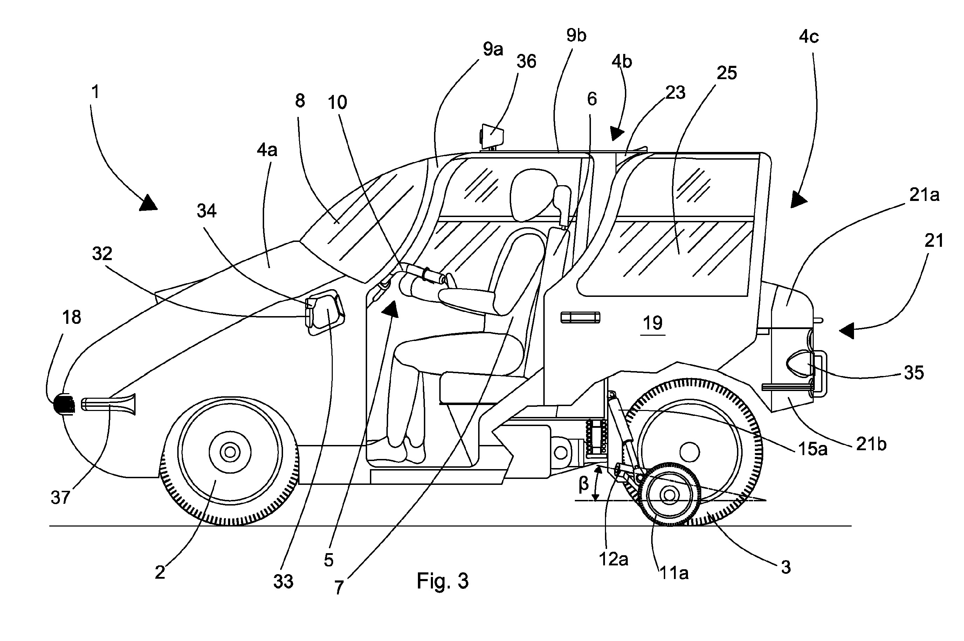

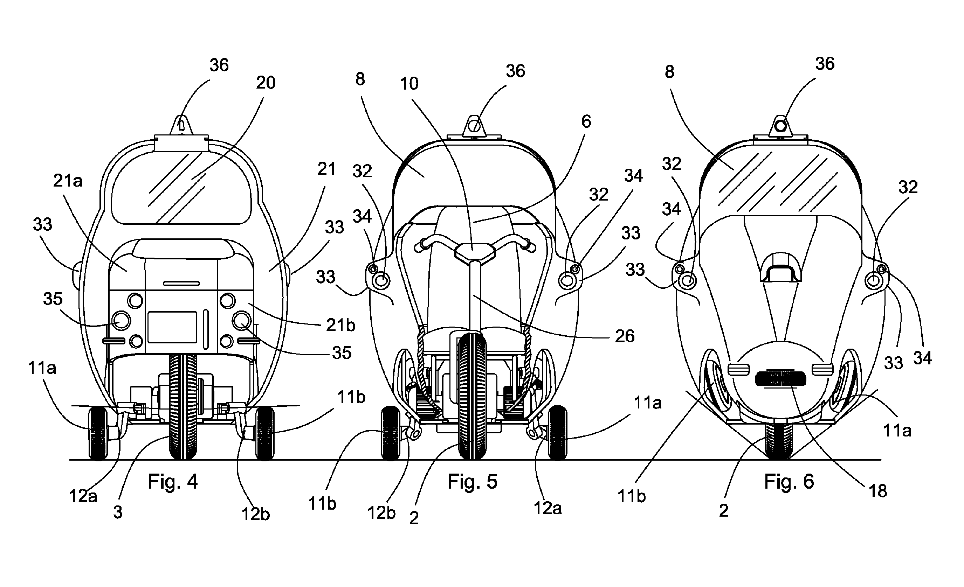

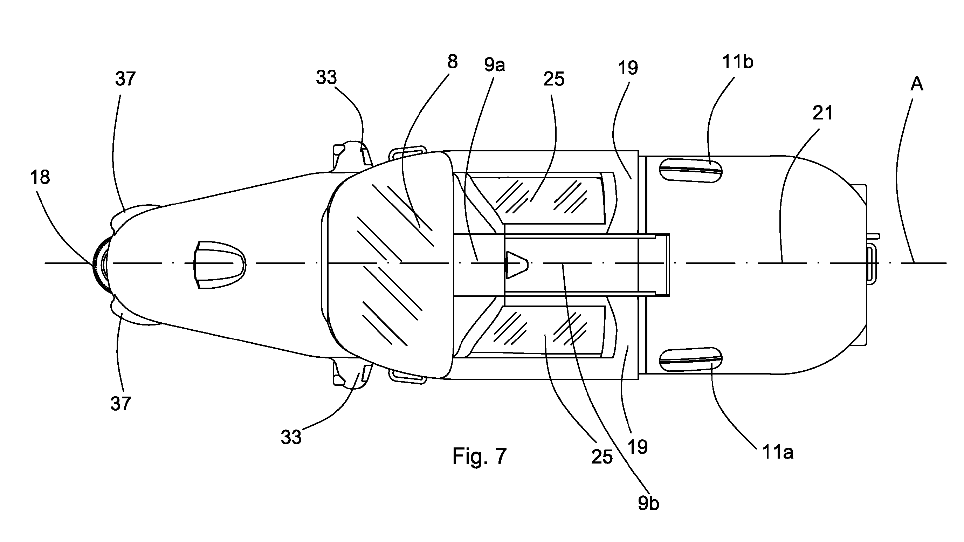

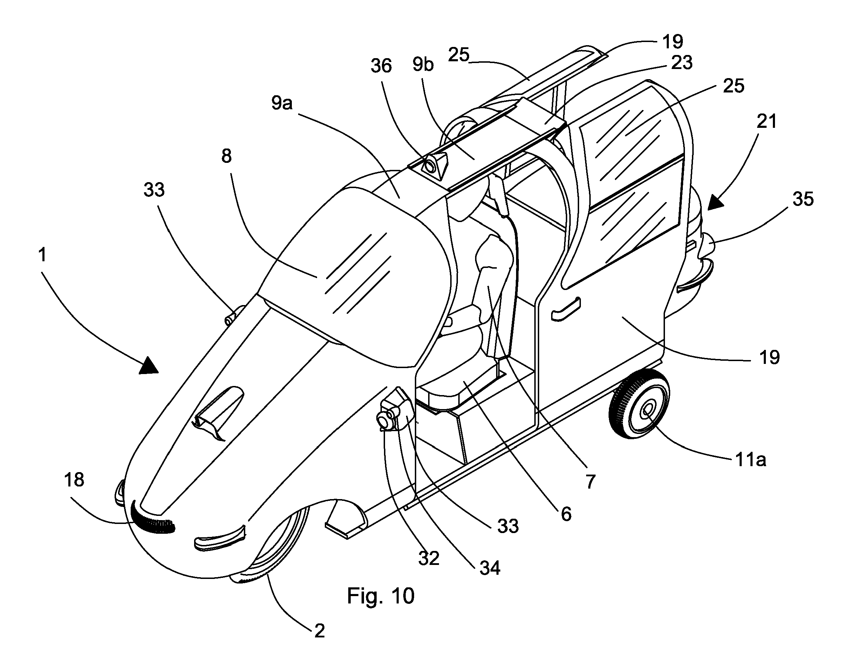

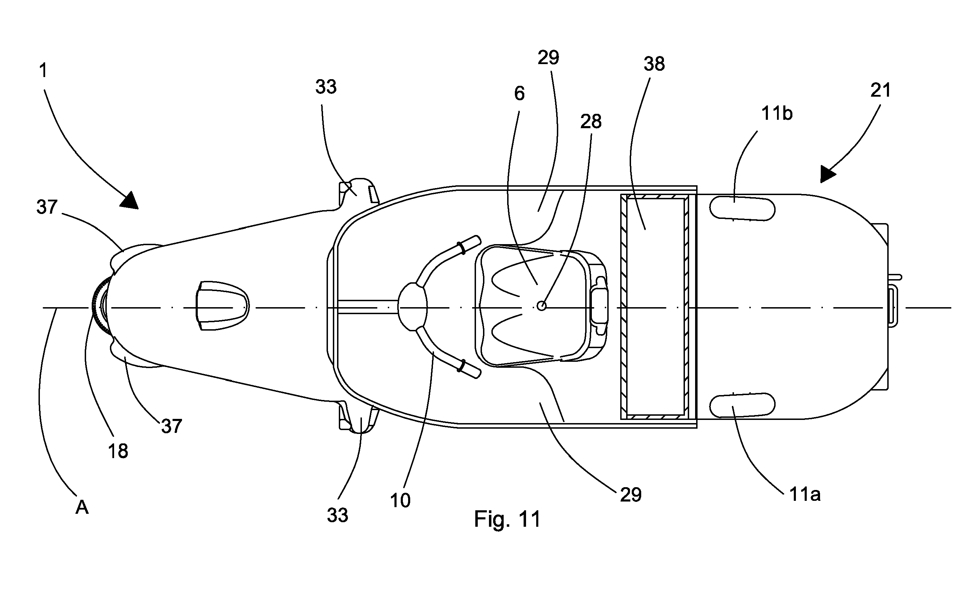

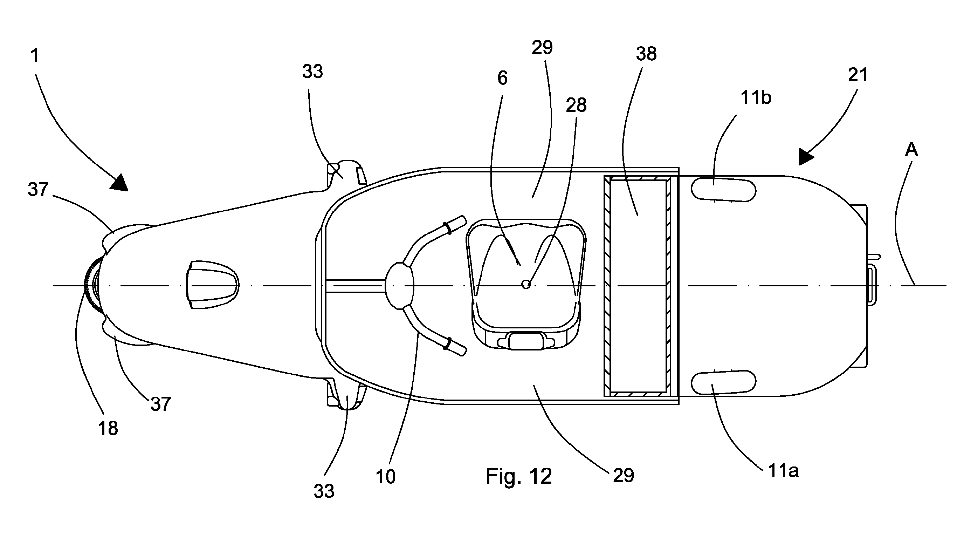

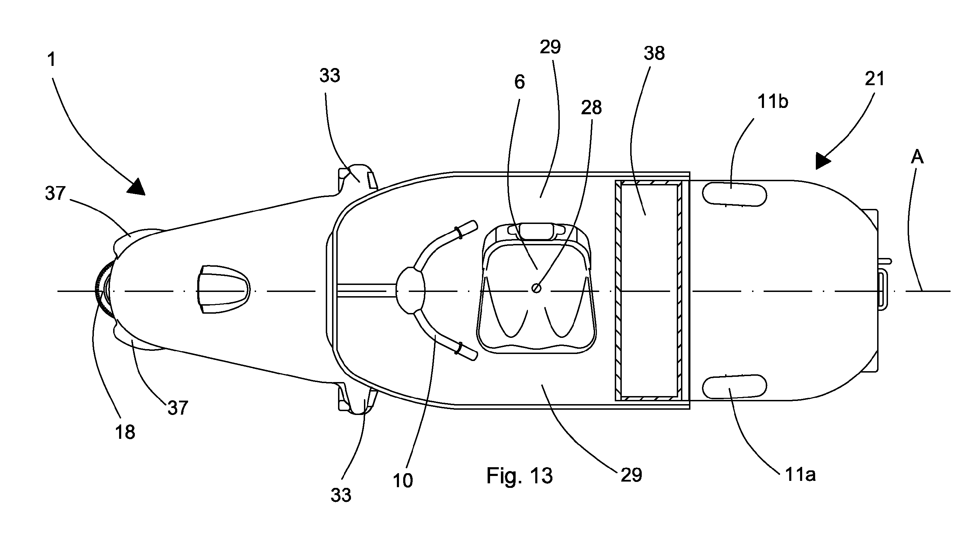

The vehicle 1 is provided with stabilising means comprising two stabilising wheels 11a, 11b placed on opposite sides with respect to a longitudinal axis A (Fig. 7)of the vehicle 1, preferably on sides opposite with respect to the back wheel 3. The stabilising wheels 11a, 11b have a diameter and a section that are noticeably less than the back wheel 3 and are movable between a first non-operating position, that is visible in Figures 1, 6 and 9, in which they are not in contact with the ground to enable the necessary rolling angle whilst negotiating bends, and a second operating position, which is visible in Figures 3, 4, 5, 7, 8, 10, 11, 12 and 13, in which they are in contact with the ground to support and stabilise the vehicle 1.

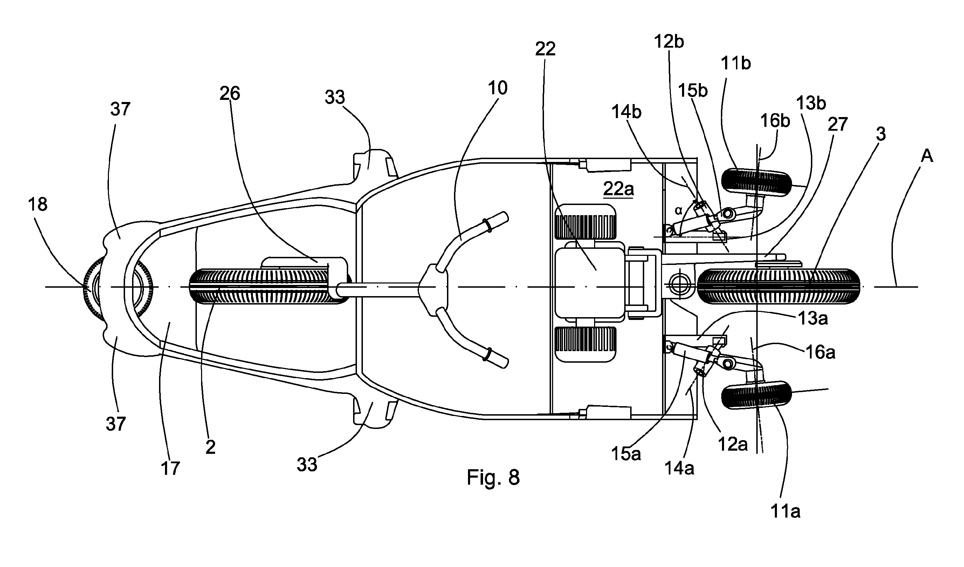

Each stabilising wheel 11a, 11b is mounted on a respective oscillating arm 12a, 12b, hinged on a respective bracket 13a, 13b (Fig. 8) of the bodywork 4. The respective hinging axis 14a, 14b of each oscillating arm 12a, 12b is tilted forwards, on a horizontal plane, with respect to the forward travel direction of the vehicle 1 (Figure 8), and downwards on a vertical plane (Figure 3), so as to form a first convex angle α on said horizontal plane and a second convex angle β on said vertical plane. This enables the stabilising wheels 11a and 11b to approach one another transversely in a retracted configuration when they are moved to said non-operating position and to move transversely away from one another in an extended configuration when they are moved to said operating position, which enables the overall dimensions of said stabilising wheels 11a, 11b to be reduced in the non-operating position and the gauge thereof to be increased in the operating position, when the stabilising wheels are resting on the ground.

Each of said oscillating arms 12a, 12b is rotated around the respective hinging axis 14a, 14b by a respective actuator 15a, 15b, for example a linear actuator having a first end fixed to the respective oscillating arm and a second end fixed to the bodywork 4 of the vehicle 1. The actuators 15a and 15b are preferably controlled electronically. The operation of the actuators 15a, 15b can be commanded automatically in function of the speed of the vehicle 1, so as to take the stabilising wheels 11a, 11b to the operating position, when the speed of the vehicle falls below a preset minimum speed, or in the event of the vehicle crashing against an obstacle, to ensure the stability of the vehicle in the travel condition at a speed below said preset value, or in the condition of stationary vehicle so as to take the stabilising wheels to the non-operating position when the speed of the vehicle 1 exceeds said preset minimum speed. Said preset minimum speed is chosen in such a manner that the vehicle can move in conditions of secure equilibrium, resting on the ground only on the front wheel 2 and back wheel 3 when the speed of the vehicle exceeds said preset minimum value.

The operation of the actuators 15a and 15b can also be controlled by the driver 7 by suitable controls placed, for example, on the handlebar 10.

The range of the actuators 15a and 15b can be adjusted in a differentiated manner in the case of travel or slow manoeuvres on roads with transverse slopes, so as to maintain the vehicle substantially vertical.

The actuators 15a, 15b can be electric-hydraulic control actuators with an accumulator, to ensure the operation thereof even in the event of a fault in the power system of the vehicle 1.

The respective rotation axes 16a, 16b of the stabilising wheels 11a, 11b are parallel to the horizontal plane, but are tilted slightly backwards with respect to the forward travel direction of the vehicle 1 to compensate for abnormal rolling angles with a tendency to restore verticality to the vehicle and to encourage the steering thereof.

The stabilising means disclosed above is applicable advantageously also to a two-wheeled vehicle without bodywork, in particular to high-powered motorcycles and/or to motorcycles with a significant weight, in this case the second end of the actuators 15a and 15b will be fixed to the frame of the vehicle. Further, driving the stabilising means will be preferably commanded by the driver of the vehicle when the vehicle is stationary or is moving at very low speed.

The bodywork 4 of the vehicle 1 is of the very tapered type, in order to obtain optimal aerodynamic penetration and consists, for example, of three parts:
a fixed front part 4a comprising a windscreen 8, a first front roof part 9a of the vehicle and a gap 17 (Fig. 8) in which to place a spare tyre 18, for example a spare tyre of the side stabilising wheels 11a, 11b, said spare tyre 18 having at least a shock-absorbing function in the event of low-speed crashes. The spare tyre 18 is carried by a fork connected directly to the frame of the vehicle 1 so as to protect elastically the vehicle and in particular the steering system in the case of a frontal crash, acting as a first stage of the shock-absorbing device. When the shock-absorbing capacity of said tyre and of the corresponding elastic supporting system has been exhausted, the deformation of the front part of the bodywork is obtained that makes the absorbing action of foamed material intervene until the steering system collapses.

The spare tyre 18 is well connected to the profile of the bodywork, thus with a shock-absorbing structural function, and general bumper function and is covered with a cover of plastic that is preferably of the same colour as the bodywork. Side cushions 37 connect the profile of the spare tyre 18 to the bodywork.

A central part 4b, forming part of the carrying structure and comprising two doors 19 to permit access to the compartment 5 of the vehicle 1 and an upper part 9b that constitutes the second part of the roof of the vehicle 1 and is frontally connected to said first front part 9a of the vehicle; a rear part 4c, that is connected above and below to the central part 4b and is provided with a pane 20 constituting the rear window of the vehicle 1, said pane 20 being able to be fixed or lowerable, in asubstantially vertical plane; the rear part 4c is completed behind by a bonnet 21 that is openable to permit access to a gap 22a in which the propulsor 22 of the vehicle 1 is housed; the bonnet 21 can be made of two parts: an upper part 21a and a lower part 21b provided with connecting means that enables said two parts to be made integral; between the lower part 21b and the upper part 21a there is defined a gap 39 with a boot function, that is accessible by opening only the upper part 21a of the bonnet 21, after releasing the upper part 21a from the lower part 21b.

In the rear part 4c there is also obtained a spoiler 23 with a drip at the rear end of the roof of the vehicle.

The doors 19 are preferably opened and closed by sliding said doors on respective longitudinal guides 24, obtained on the respective sides of the rear part 4c of the bodywork 4. Alternatively, it is possible to provide doors 19 hinged at one end to the bodywork 4. Using sliding doors is advantageous, because it makes entering and exiting the vehicle 1 easier in the case of reduced space on the sides of the vehicle 1.

The doors 19 are provided with respective windows 25 with lowerable panes having dimensions such as to enable the driver 7 to exit the vehicle through the gap of the windows 25 in the event of an emergency.

The front wheel 2 is connected to the handlebar 10 by a front suspension 26 of motorcycle type, for example of the single arm type on the rotatable sleeve, mounted on a deformable parallelogram or equivalent system. The suspension of the single-arm type is preferable for facilitating replacement of the front wheel.

The back wheel 3 is associated with a suspension 27 of the single-arm motorcycle type, preferably with a transmission integrated enclosed inside the arm.

The front wheel 2 and the back wheel 3 preferably have the same radius but a different section so as to require a only spare tyre.

The seat 6 of the driver 7 is preferably of the enveloping type of a height that is convenient for getting in or out, anchoring is also provided (not shown) for three-point seat belts on the floor of the compartment 5 and on the seat 6.

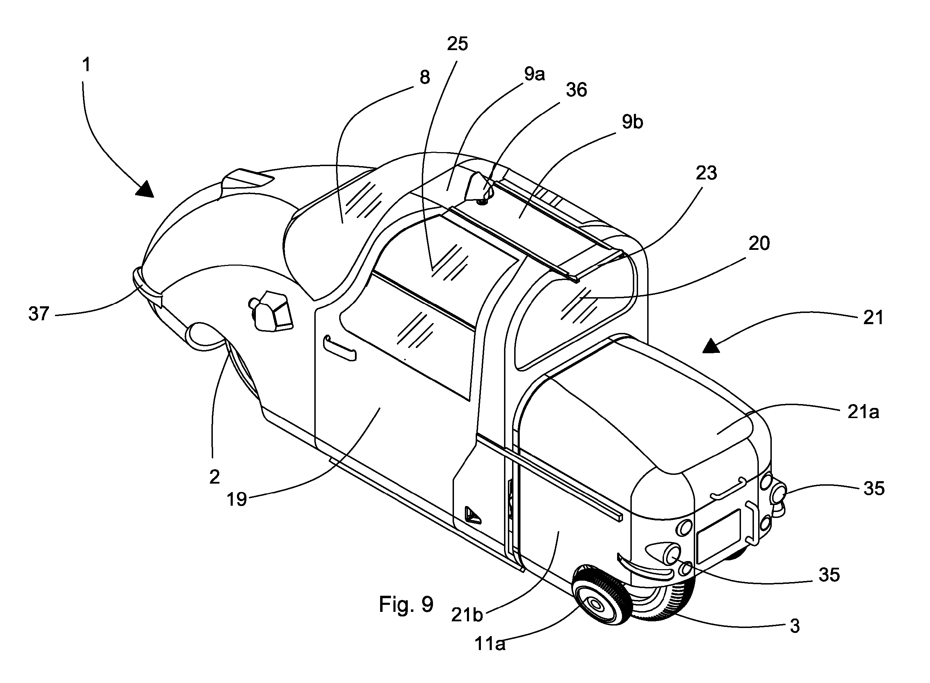

The seat 6 is provided with a substantially vertical rotation axis 28 (Fig. 9) to enable the seat 6 to rotate to facilitate entering and exiting the vehicle, the seat 6 being rotated, for example, by a manual seat-release control.

The compartment 5 can be dimensioned so that on the sides of the seat 6 respective side spaces 29 (Fig. 9) remain available that can be used by the driver to place objects such as, for example, small bags; a further space 38, that can also be used by the driver to place objects, can be obtained behind the back of the seat.

Under the seat 6 a gap 30 is obtained that is intended to house the starter battery 31 and the air-conditioning system of the vehicle, if the vehicle is provided with an internal combustion engine, or the traction battery if the vehicle is provided with a purely electric propulsor.

The vehicle 1 is provided with legally prescribed lighting devices, comprising two front dipped headlights 32 that are integrated into the supports of the rear-view side mirrors 33 into which are integrated also the parking lights 34, rear parking lights 35 and a dipped headlight 36 that is positioned, for example, on the second part 9b of the roof of the vehicle 1.

The dipped headlights 32 each consist of a unit with a fixed aiming or of unit with a aiming that is adjustable only in height.

The dipped headlight 36 is orientable from the driving position by an internal lever (which is not shown), both horizontally and vertically, to make external objects visible that would not otherwise be illuminable by means of the dipped headlights 32.

In a normal travelling aiming condition, the internal lever that controls the aiming of the dipped headlight 36 is arranged so as not to constitute any obstacle or hazard.

The control of the accelerator is arranged on the handlebar 10, whilst the brake is preferably of the pedal type arranged on the floor of the compartment 5.

The vehicle 1 can be provided with air bags arranged inside the compartment 5, for example a single side and front air bag, with an enveloping shape that is able to provide the driver 7 with protection on three sides.

The vehicle 1 can be provided with automatic or manually commanded mechanical transmission, with a reverse and parking stopping device.

The propulsor 22 may be a petrol, diesel or hydrogen internal combustion engine or be an electric or electric hybrid propulsor associated with a CVT transmission.

The fuel tank, if it exists, is preferably arranged in the gap 22a between the propulsor 22 and the rear part of the compartment 5.

The driving mode of the vehicle 1, although the position of the driver is typically of that of an automobile, is a motorcycle-type driving mode, there being the handlebar 10 for the direct control of steering of the front wheel.

Bends are negotiated by lateral tilting of the entire vehicle, with direct control of rolling by the driver 7, that controls the tilt of the vehicle, and steering, in addition to ensuring the stability of the equilibrium in bends.

The stabilising side wheels 11a, 11b, are lowered automatically to the ground in the operating position, in the event of sharp braking when the speed of the vehicle 1 falls below said preset minimum speed, which may be, for example, equal to about 15 km/h, or in the event of a crash of the vehicle 1 against an obstacle. Lowering of the stabilising wheels 11a, 11b to the operating position is preferably indicated by a pilot lamp lighting up on the dashboard of the vehicle 1.

It is also possible to provide for the stabilising wheels 11a, 11b also being able to be lowered partially, by a manual command, in the case of intermediate speeds between the manoeuvring speeds and those at which the control of the stability of the vehicle requires appreciable rolling angles, for example in the case of a very slippery road surface. In the case of manual lowering of the stabilising wheels 11a, 11b, the light of the pilot lamp that indicates the lowering, becomes a flashing light and can be accompanied by an acoustic signal when the speed of the vehicle becomes hazardous if the side wheels are lowered (for example ad a speed of approximately 40 km/h): at this point only an additional command causes the side stabilising wheels 11a, 11b to lift up and the alarms to switch off.

The vehicle 1 according to the invention has numerous advantages such as, for example, the same level of comfort as a saloon in the upper price bracket, with protection from atmospheric agents, soundproofing, a comfortable, semisitting driving position; weight reduction, reduction of purchasing and operating costs, ease of parking even in restricted spaces, with excellent accessibility from both sides; manoeuvring and mobility spaces comparable with a powerful motorcycle, but with a perception of comfort and passive safety that are comparable to those of a saloon; reduction, for the same mileage, of fuel costs and polluting emissions compared with a motor vehicle, reduction of the spaces occupied both during movement and when stationary; easy disposal compared with a motor vehicle of comparable comfort.

In the practical embodiment, the materials, dimensions and constructional details may be different from those indicated but be technically equivalent thereto without thereby falling outside the scope of the present invention.

## Claims

1. Two-wheeled (2, 3) vehicle (1) comprising a front wheel (2) and a back wheel (3) aligned on themselves along a longitudinal axis (A) of the vehicle (1), a closed bodywork (4) of automobile type inside which there is defined a compartment (5) for a driver (7), and propelling means (22), **characterised in that** it comprises stabilising means (11a, 11b) suitable for ensuring a stable support on the ground of said vehicle (1), said stabilising means (11a, 11b) being activatable when said vehicle (1) moves at a lesser speed than a preset minimum speed, or in the event of crashing of said vehicle (1) against an obstacle.

2. Two-wheeled (2, 3) vehicle (1) comprising a front wheel (2) and a back wheel (3) aligned on themselves along a longitudinal axis (A) of the vehicle (1), and propelling means (22), **characterised in that** it comprises stabilising means (11a, 11b) suitable for ensuring a stable support on the ground of said vehicle (1), said stabilising means (11a, 11b) being activatable when said vehicle (1) moves at a lesser speed than a preset minimum speed, or in the event of crashing of said vehicle (1) against an obstacle.

3. Vehicle (1) according to claim 1, or 2, wherein said stabilising means comprises two stabilising wheels (11a, 11b) arranged on opposite sides with respect to said longitudinal axis (A), said stabilising wheels (11a, 11b) being movable between a first non-operating position, in which they are not in contact with the ground, and a second operating position, in which they are in contact with the ground to support and stabilise the vehicle (1).

4. Vehicle (1) according to claim 3, wherein said stabilising wheels (11a, 11b) are arranged on opposite sides with respect to said back wheel (3).

5. Vehicle (1) according to claim 3, or 4, wherein said stabilising wheels (11a, 11b) have a diameter and section that are noticeably less than the diameter and section of said back wheel (3).

6. Vehicle (1) according to any one of claims 3 to 5, wherein each of said stabilising wheels (11a, 11b) is mounted on a respective oscillating arm (12a, 12b), hinged on a respective bracket (13a, 13b) of the bodywork (4), each oscillating arm (12a, 12b) having a respective hinging axis (14a, 14b) that is tilted forwards, on a horizontal plane, with respect to the forward travel of the vehicle (1), and downwards on a vertical plane, so as to form a first convex angle (α) on said horizontal plane and a second convex angle (β) on said vertical plane with respect to said forward travel direction.

7. Vehicle (1) according to claim 6, wherein each of said oscillating arms (12a, 12b) is rotated around the respective hinging axis (14a, 14b) by a respective actuator (15a, 15b).

8. Vehicle (1) according to claim 7, wherein each of said actuators (15a, 15b) is a linear actuator having a first end fixed to the respective oscillating arm (12a, 12b) and a second end fixed to the bodywork (4) of the vehicle (1), or to the frame of the vehicle.

9. Vehicle (1) according to claim 7, or 8, wherein said actuators (15a, 15b) are drivable automatically when the speed of the vehicle (1) falls below said preset value, or in the event of a crash of the vehicle (1) against an obstacle.

10. Vehicle (1) according to claim 7, or 8, wherein said actuators (15a, 15b,) are drivable manually by the driver (7) of the vehicle (1).

11. Vehicle (1) according to claim 1 or any one of claims 3 to 10, as appended to claim 1, wherein with said front wheel (2) there is associated a handlebar (10) extending inside the compartment (5), said handlebar (10) commanding the steering of said front wheel (2).

12. Vehicle (1) according to claim 11, wherein said handlebar (10) is connected to said front wheel (2) by first suspension means (26).

13. Vehicle (1) according to claim 12, wherein said first suspension means (26) is a suspension means of motorcycle type.

14. Vehicle (1) according to claim 13, wherein said first suspension means (26) is of the single-arm type on a rotatable sleeve, mounted on a deformable parallelogram.

15. Vehicle (1) according to any preceding claim, wherein said back wheel (3) is associated with second suspension means (27).

16. Vehicle (1) according to claim 15, wherein said second suspension means (27) is a suspension means of motorcycle type.

17. Vehicle (1) according to claim 16, wherein said second suspension means is of the single-arm type, with integrated transmission connected to said propelling means (22) and enclosed inside said single arm.

18. Vehicle (1) according to claim 1, or any one of claims 3 to 17, as appended to claim 1, wherein said bodywork (4) comprises a first front part (4a), a second central part (4b) and a third rear part (4c) connected together.

19. Vehicle according to claim 18, wherein said front part (4a) comprises a windscreen (8), a first roof part (9a) of the vehicle (1) and a gap (17) suitable for housing a spare tyre (18).

20. Vehicle (1) according to claim 18, or 19, wherein said central part (4b) comprises two doors (19) to permit access to the compartment (5) and an upper part (9b) that constitutes the second part of the roof of the vehicle (1) and is frontally connected to said first part (9a) of the roof.

21. Vehicle (1) according to any one of claims 17 to 19, wherein said rear part (4c) comprises a pane (20) constituting the rear window of the vehicle (1), and an openable bonnet (21) to enable access to a gap (22a) in which the propelling means (22) is housed.

22. Vehicle (1) according to claim 20, wherein said bonnet (21) comprises an upper part (21a) and a lower part (21b), being provided connecting means for making said upper part (21a) and said lower part (21b) integral with one another.

23. Vehicle (1) according to claim 22, wherein between said upper part (21a) and said lower part (21b) there is defined a gap (39).

24. Vehicle (1) according to any one of claims 21 to 23, wherein said doors (20) are doors of sliding type, on said rear part (4c) there being obtained respective sliding guides (24) for said doors (19).

25. Vehicle (1) according to any one of claims 21 to 24, wherein said doors (19) are provided with respective lowerable windows (25).

26. Vehicle (1) according to claim 25, wherein said windows (25) have dimensions such as to enable the driver (7) of the vehicle to pass through the windows to leave the vehicle (1).

27. Vehicle (1) according to claim 1 or any one of claims 3 to 26, as appended to claim 1, wherein inside said compartment (5) there is arranged a seat (6) for the driver (7), said seat (6) being rotatable around a substantially vertical rotation axis (28).

28. Vehicle (1) according to claim 27, wherein inside said compartment (5), on the sides of said seat (6) respective spaces (29) are defined that are usable for placing objects there.

29. Vehicle (1) according to claim 1 or any one of claims 3 to 28, as appended to claim 1, wherein in the lower part of said compartment (5) a gap (30) is obtained that is suitable for housing a battery (31) and air-conditioning means of the vehicle (1).

30. Vehicle (1) according to claim 1 or any one of claims 3 to 29, as appended to claim 1, wherein said closed bodywork (4) is provided with side rear-view mirrors (33) into which headlight dipped illuminating means (32) and parking lights (33) are integrated.

31. Vehicle (1) according to claim 1 or any one of claims 3 to 30, as appended to claim 1, wherein on the upper part of said bodywork (4) headlight dipped illuminating means (36) is mounted, said headlight dipped illuminating means (38) being positionable by a manual control arranged inside said compartment (5).

32. Vehicle (1) according to claim 1 or any one of claims 3 to 31, as appended to claim 1, wherein said propelling means comprises internal-combustion propelling means, or electric propelling means or hybrid propelling means.

33. Vehicle (1) according to claim 1 or any one of claims 3 to 33, as appended to claim 1, wherein inside said compartment (5) air-bag means is provided.

34. Vehicle (1) according to claim 33, wherein said air-bag means comprises a single air bag of enveloping type.
